# EUROPÄISCHE PATENTSCHRIFT

(11) **EP 1 345 800 B1**
(45) Veröffentlichungstag und Bekanntmachung des Hinweises auf die Patenterteilung: **15.05.2013**
(21) Anmeldenummer: 01995626.7
(22) Anmeldetag: 05.11.2001
(51) Int. Cl.: B60T 8/36, B60T 17/22, B60T 13/66, B60T 7/04

(54) **VERFAHREN ZUM BETREIBEN EINES ELEKTRONISCH REGELBAREN BREMSBETÄTIGUNGSSYSTEMS UND ELEKTRONISCH REGELBARES BREMSBETÄTIGUNGSSYSTEM**
METHOD FOR OPERATING AN ELECTRONICALLY CONTROLLABLE BRAKE ACTUATION SYSTEM, AND AN ELECTRONICALLY CONTROLLABLE BRAKE ACTUATION SYSTEM
PROCEDE POUR ACTIONNER UN SYSTEME D'ACTIONNEMENT DE FREIN A REGULATION ELECTRONIQUE ET SYSTEME D'ACTIONNEMENT DE FREIN A REGULATION ELECTRONIQUE

(30) Priorität: 23.11.2000 DE 10058289; 25.09.2001 DE 10147180
(43) Veröffentlichungstag der Anmeldung: 24.09.2003
(73) Patentinhaber: Continental Teves AG & Co. oHG, 60488 Frankfurt (DE)
(72) Erfinder: BURGDORF, Jochen, 63075 Offenbach (DE); VOLZ, Peter, 64291 Darmstadt (DE)
(86) Internationale Anmeldenummer: PCT/EP2001/012794
(87) Internationale Veröffentlichungsnummer: WO 2002/042135

(56) Entgegenhaltungen:
- DE-A- 3 709 189
- DE-A- 3 806 840
- DE-A- 3 935 353
- DE-A- 4 121 278
- DE-A- 4 337 133

## Beschreibung

Die Erfindung betrifft ein Verfahren zum Betreiben eines elektronisch regelbaren Bremsbetätigungssystems für Kraftfahrzeuge, mit einem drucklosen Druckmittelvorratsbehälter, mit mindestens einer durch eine elektronische Steuereinheit ansteuerbaren Druckquelle, mit deren Druck Radbremsen des Fahrzeuges beaufschlagbar sind, mit einer Einrichtung zur Erkennung eines Fahrerverzögerungswunsches, deren Ausgangssignale der elektronischen Steuereinheit zugeführt werden, sowie mit den Radbremsen vorgeschalteten Ventileinrichtungen, die von der elektronischen Steuereinheit ansteuerbar sind und die die Radbremsen anhand eines Rohrleitungssystems wahlweise mit der Druckquelle oder mit dem Druckmittelvorratsbehälter verbinden. Außerdem betrifft die Erfindung ein elektronisch regelbares Bremsbetätigungssystem.

Ein elektronisch regelbares Bremsbetätigungssystem ist zum Beispiel aus dem Fachartikel "Electrohydraulic Brake System - The First Approach to Brake-By-Wire Technology", SAE Paper 960991, bekannt.

Weil ein Fahrzeugführer bei elektrohydraulischen Bremsanlagen (EHB) von der Bremskrafterzeugung entkoppelt ist, und die Bremswunschumsetzung gewissermaßen *by wire* erfolgt, wird ein Sollwertgeber mit Simulator verwendet, welcher das Pedalgefühl infolge Betätigung vergleichbar der Rückwirkung einer konventionellen Bremsanlage nachbildet. Der Sollwertgeber verfügt ferner über einen Hauptzylinder, welcher einen hydraulischen Notbremsbetrieb bei defekter Elektronik mittels direkter Betätigung der Radbremsen erlaubt (sogenannte hydraulische Rückfallebene). Sobald im by-wire Modus ein Betätigungswunsch infolge Sensierung beispielsweise eines Betätigungsweges eines Bremspedals erkannt wird, werden Trennventile geschlossen, um einen direkten hydraulischen Durchgriff des Hauptzylinders in Richtung Radbremsen zu sperren. Während der Bremsdruckaufbau auf elektrohydraulischem Wege eingeleitet wird, erfährt der Fahrzeugführer eine Rückwirkungskraft infolge einer, der Betätigungsbewegung entsprechenden Volumenverschiebung in den Simulator.

Die Verfügbarkeit der hydraulischen Rückfallebene ist von großer Wichtigkeit. Insbesondere während des by-wire-Betriebs unbemerkt eingeschleppte Luft kann die Funktion der hydraulischen Rückfallebene einschränken oder verhindern, weil das Druckmittel bei fahrerseitigem Druckaufbau kompressibel reagiert. Die erwähnte Veröffentlichung läßt keine Maßnahmen erkennen, welche eine bei by-wire Bremssystemen auftretende Funktionsstörung - welche beispielsweise durch Kompressibilität oder andere Verunreinigung verursacht wird - eliminieren oder zumindest erheblich reduzieren könnten.

Aus der DE 29 37 957 B1 geht eine Entgasungsvorrichtung hervor, welche einen Vakuumkreis mit einer Vakuumquelle erfordert, und zur Reinigung eines by-wire Bremssystems nicht geeignet ist.

Aus der DE 197 17 043 A1 geht eine Vorrichtung zum Entwässern und / oder Entgasen von Hydraulikflüssigkeiten hervor, welche eine für die Hydraulikflüssigkeit undurchlässige - semipermeable - Membran erfordert. Nach dem physikalischen Prinzip der Pervavoration werden Gas und / oder Wasser durch die Membran hindurch aus der Hydraulikflüssigkeit abgeschieden. Die Membran ist als gesondertes, zusätzliches Bauteil kostenintensiv. Schwebstoffe verbleiben bei dieser Vorrichtung in der Hydraulikflüssigkeit.

Der gattungsgemäßen DE 38 06 840 A1 ist eine Entlüftungsvorrichtung und ein Entlüftungsverfahren für Sekundärhydraulikkreise eines Antiblockierregelsystems entnehmbar. Für die Entlüftung ist eine separate Steuereinheit erforderlich, welche anstelle des Steuergerätes des Antiblockierregelsystems an einen Kabelbau anzuschließen ist, bevor die Entlüftung erfolgen kann.

Es ist eine Aufgabe der vorliegenden Erfindung, eine Verbesserung der Abscheidung von Verunreinigungen des Bremssystems zu ermöglichen.

Die Aufgabe wird im Wesentlichen dadurch gelöst, dass die elektronische Steuereinheit des Bremsbetätigungssystems als Mittel zum elektronisch gesteuerten Abscheiden von im Bremssystem, insbesondere im Druckmittel enthaltenen oder gelösten Verunreinigungen vorgesehen ist. Die Mittel bewirken die Abscheidung von Verunreinigungen, und insbesondere eine sukzessive Reduktion von Gasen, so daß die Verfügbarkeit der hydraulischen Rückfallebene auch für den Fall gegeben ist, daß an irgendeiner Stelle eine Undichtigkeit auftritt.

Wenn Mittel zum Abscheiden ein integraler Bestandteil des Bremsbetätigungssystems sind, geht damit ein einfacher kompakter Aufbau einher, weil die Mittel ein in das Rohrleitunssystem integrierter Systembestandteil sind. Das Mittel kann insbesondere in einen Druckmittelvorratsbehälter 4 integriert sein. Ein weiter vereinfachter Aufbau ist gegeben, wenn ein unerläßliches Bauteil des Bremsbetätigungssystems gleichzeitig als Mittel zum Abscheiden herangezogen wird. Mit anderen Worten liegt eine Doppelfunktion vor, so daß die Kosten der Mittel für die Abscheidung äußerst gering sind.

Für einen beschleunigten Abscheidungsprozeß ist die Druckmittelströmung so bemessen, daß Leitungsabschnitte mit hoher Druckmittelströmungsgeschwindigkeit vorgesehen sind, und daß sich stromabwärts wenigstens ein Abscheidungsabschnitt mit demgegenüber niedriger Druckmittelströmungsgeschwindigkeit anschließt. Der Wechsel zwischen den Druckmittelströmungsgeschwindigkeiten erfolgt weitgehend kurzfristig.

Gemäß einer bevorzugten Ausführungsform der Erfindung ist wenigstens ein Mittel zum Erwärmen des Druckmittels vorgesehen. Ein sogenannter Ausheizvorgang verbessert das Ausgasungsverhalten des Druckmittels.

Für die Beschleunigung des Ausgasens ist weiterhin von Vorteil, wenn sich der Abscheidungsabschnitt im Bereich einer Drucksenke befindet. Zur weiteren Druckabsenkung kann im Bereich des Abscheidungsabschnittes (Druckmittelbehälter) zusätzlich Unterdruck oder Vakuum vorgesehen werden.

Zur weiteren Verbesserung der Abscheidung kann ein Systembestandteil, insbesondere der Abscheidungsabschnitt, mit einem Ultraschallgenerator zur Erzeugung von Ultraschallschwingungen in dem Druckmittel versehen sein.

Gemäß eines Verfahrens zum Betreiben eines elektronisch regelbaren Bremsbetätigungssystems führt die elektronische Steuereinheit einen elektronisch gesteuerten Verfahrensschritt betreffend die Abscheidung von im Bremssystem, insbesondere im Druckmittel, enthaltenen und / oder gelösten Verunreinigungen durch. Weil eine Abscheidung von beispielsweise Lufteinträgen vorgenommen wird, können die Dichtheitsanforderungen an die Bauteile des Systems verringert werden.

Nach einer vorteilhaften Ausführungsform der Erfindung ist der Verfahrensschritt automatisiert und / oder auf Abruf durchführbar. Dadurch wird es ermöglicht, die Abscheidung der Verunreinigungen auf Wunsch oder beispielsweise programmgesteuert während Stillstandsphasen des Fahrzeugs automatisiert durchzuführen.

In vorteilhafter Weiterbildung der Erfindung ist für die Abscheidung eine Spülroutine vorgesehen, welche eine Umwälzung des Druckmittels bewirkt, so daß unerwünschte Verunreinigungen auch aus toten, das heißt bei Normalbetrieb nicht oder nur gering durchfluteten, Rohrleitungszweigen entfernt werden können.

Im Rahmen der Spülroutine ist es denkbar, die Ventileinrichtungen gemäß einer vorgebbaren zeitlichen Abfolge von einer Öffnungsstellung in eine Schließstellung sowie umgekehrt zu steuern, und eine Druckmittelförderung mittels einer Pumpe aufzunehmen, so daß alle Rohrleitungszweige durchspülbar sind. Die Länge der Spülroutine kann in Abhängigkeit von dem Verunreinigungsgrad geregelt werden.

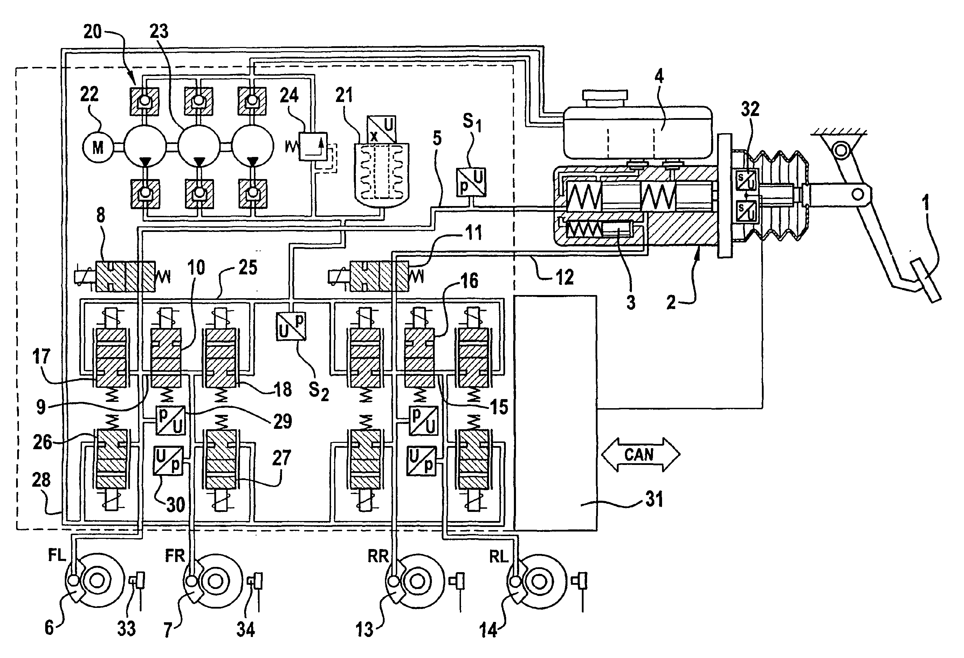

Die Erfindung wird in der nachfolgenden Beschreibung eines Ausführungsbeispieles unter Bezugnahme auf die beiliegende Zeichnung näher erläutert. In der Zeichnung zeigt die einzige Figur ein schematisiertes Schaltbild eines elektrohydraulischen Bremsbetätigungssystems, welches sich in einer stromlosen, sogenannten hydraulischen Rückfallebene befindet.

Ein elektronisch regelbares Bremsbetätigungssystem besteht aus einem mittels eines Betätigungspedals 1 betätigbaren, zweikreisigen Hauptbremszylinder bzw. Tandemhauptzylinder 2, der mit einem Simulator 3 zusammenwirkt sowie zwei voneinander getrennte Druckräume aufweist, die mit einem drucklosen Druckmittelvorratsbehälter 4 in Verbindung stehen. An einen ersten Druckraum sind mittels einer absperrbaren ersten hydraulischen Leitung 5, in die ein Drucksensor S₁ eingefügt ist, beispielsweise der Vorderachse zugeordnete Radbremsen 6,7 angeschlossen. Das Absperren der Leitung 5 erfolgt mittels eines ersten Trennventils 8, während in einem zwischen den Radbremsen 6,7 geschalteten Leitungsabschnitt 9 ein elektromagnetisch betätigbares, vorzugsweise stromlos offenes (SO) Druckausgleichsventil 10 eingefügt ist, das im geschlossenen Zustand eine radindividuelle Bremsdruckregelung ermöglicht.

Der zweite Druckraum des Hauptbremszylinders 2 ist über eine mittels eines zweiten Trennventils 11 absperrbare zweite hydraulische Leitung 12 mit einem, der Hinterachse zugeordneten Radbremsenpaar 13, 14 verbindbar. In einem zwischen den Radbremsen 13, 14 geschalteten Leitungsabschnitt 15 ist ein elektromagnetisch betätigbares, vorzugsweise stromlos offenes (S0) Druckausgleichsventil 16 eingefügt. Da der Aufbau des an den zweiten Druckraum des Hauptbremszylinders 2 angeschlossenen hydraulischen Kreises der Hinterachse identisch dem des in der vorstehenden Beschreibung erläuterten Vorderachskreis entspricht, erfolgt nachstehende Beschreibung ausschließlich anhand des Vorderachskreis.

Wie der Zeichnung zu entnehmen ist, ist ein als Druckquelle 20 dienendes Motor-Pumpen-Aggregat mit einem Hochdruckspeicher 21 vorgesehen, das seinerseits aus einer mittels eines Elektromotors 22 angetriebenen Pumpe 23 mit vorzugsweise mehreren Fördervorrichtungen sowie einem der Pumpe 23 parallel geschalteten Druckbegrenzungsventil 24 besteht. Die Saugseite der Pumpe 23 ist über ein Rückschlagventil an den erwähnten Druckmittelvorratsbehälter 4 angeschlossen. Der von der Pumpe 23 aufgebrachte hydraulische Druck kann von einem Drucksensor S₂ überwacht werden.

Eine dritte hydraulische Leitung 25 verbindet den Hochdruckspeicher 21 mit Eingangsanschlüssen von zwei elektromagnetisch analog ansteuerbaren, stromlos geschlossenen 2/2-Wegeventilen 17, 18, die als Einlaßventile den Radbremsen 6 und 7 vorgeschaltet sind. Außerdem sind die Radbremsen 6, 7 über je ein elektromagnetisch analog ansteuerbares, stromlos geschlossenes 2/2-Wegeventil bzw. Auslaßventil 26, 27 an eine vierte hydraulische Leitung 28 angeschlossen, die andererseits mit dem drucklosen Druckmittelvorratsbehälter 4 in Verbindung steht. Der in den Radbremsen 6,7 herrschende hydraulische Druck wird mit Hilfe je eines Drucksensors 29, 30 ermittelt.

Der gemeinsamen Ansteuerung des Motor-Pumpen-Aggregats 20 sowie der Elektromagnetventile 8,10,11,16,17,18,26,27 dient eine elektronische Steuereinheit 31 (ECU), der als Eingangssignale die Ausgangssignale eines mit dem Betätigungspedal 1 zusammenwirkenden Betätigungswegsensors 32 sowie des erwähnten Drucksensors S₁ zugeführt werden und die eine Fahrerverzögerungswunscherkennung ermöglichen. Zur Fahrerverzögerungswunscherkennung können jedoch auch andere Mittel, beispielsweise ein die Betätigungskraft am Betätigungspedal 1 sensierender Kraftsensor verwendet werden. Als weitere Eingangsgrößen werden der elektronischen Steuereinheit 31 die Ausgangssignale der Drucksensoren 29, 30 sowie die der Geschwindigkeit des Fahrzeuges entprechenden Ausgangssignale von lediglich schematisch angedeuteten Radsensoren 33, 34 zugeführt.

Um in dem Rohrleitungsnetz des Bremssystems befindliche Verunreinigungen abzuscheiden, wird in einem gesonderten Verfahrensschritt eine elektronisch anhand eines Datenverarbeitungsprogramms gesteuerte Spülroutine des Druckmittels durchgeführt. Mit Hilfe der Spülroutine lassen sich in dem Druckmittel enthaltene und / oder gelöste Verunreinigungen wie insbesondere Gase (Luft) oder Flüssigkeiten abscheiden. Zu diesem Zweck werden die Ventileinrichtungen 8,10,11,16,17,18,26,27 in einer bestimmten, vorgebbaren zeitlichen Abfolge von einer Öffnungsstellung in eine Schließstellung gesteuert oder umgekehrt, so daß alle Zweige des Rohrleitungssystems von einem durch die elektronisch angesteuerte Pumpe 23 erzeugten Druckmittelstrom durchströmt werden. Der Begriff Rohrleitungssystem versteht sich in seiner allgemeinsten Bedeutung und schließt selbstverständlich Bohrungen, Kanäle in Bauteilen eines Bremssystems, insbesondere Kanäle in einer hydraulischen Drucksteuereinheit (sogenannter Ventilblock) oder dem Tandemhauptzylinder 2, ein. Im Rahmen der Spülroutine wird das Druckmittel gewissermaßen kreislaufartig mit hoher Strömungsgeschwindigkeit durch das Rohrleitungssystems gepumpt, wobei stromabwärts im Bereich eines in das Rohrleitungssystem integrierten, beruhigten Abscheidungsabschnittes mit gegenüber dem übrigen Rohrleitungssystem verringerter Strömungsgeschwindigkeit die Abscheidung - beispielsweise infolge Ausgasen (Gase) oder Absetzen (Schwebstoffteile) erfolgt. Es versteht sich, daß die elektronische Regelung der Spülroutine neben Verfahrensparametern wie beispielsweise die zeitliche Ansteuerungssystematik der Ventileinrichtungen 8,10,11,16,17,18,26,27 auch die Spüldauer, den Spüldruck oder ähnliches mehr umfasst.

In der Schaltstellung der hydraulischen Rückfallebene können, wie aus der Figur ersichtlich, bei geöffneten Trennventilen 8, 11 und geschlossenen Einlaßventilen 17,18 die Leitungsabschnitte 5, 12 sowie der Hauptzylinder 2 gespült werden, indem durch die Druckquelle 20 Druckmittel eingespeist wird. Zum Durchspülen der übrigen Kreislaufteile werden die Trennventile vergleichbar dem brake-by-wire-Modus geschlossen, und die übrigen Ventile 10,16,17,18 bei geöffneten Ablaßventilen 26, 27 wechselweise so angesteuert, daß eine Reinigung aller Kreislaufteile erfolgt.

Die Spülroutine ist aufgrund der elektronischen Ansteuerbarkeit der Ventileinrichtungen 8,10,11,16,17,18,26,27 und der Druckquelle 20 sehr flexibel und zu grundsätzlich beliebigen Zeitpunkten als separater, elektronisch gesteuerter Verfahrensschritt durchführbar. Es ist beispielsweise denkbar, die Spülroutine während des Fahrbetriebs, insbesondere nach Fahrtantritt oder kurz vor Fahrtbeendigung durchzuführen, soweit die Bremsanlage nicht betätigt wird. Es ist ferner denkbar, die Spülroutine nach Beendigung des Fahrbetriebes, vorzugsweise unmittelbar nach dem Abstellen des Fahrzeuges oder währen dem Fahrbetrieb zu bestimmten Fahrsituationen durchzuführen (beispielsweise während einer Bremspause nach starker Bremsbeanspruchung - Paßabfahrt), oder wenn ein gesondertes Verfahren zur Erkennung von Verunreinigungen einen Abscheidungsbedarf detektiert. In Abwandlung der Erfindung ist es möglich, die Spülroutine periodisch oder mit einem gesonderten (Software-)Schalter abzurufen, was gegebenenfalls im Rahmen einer Fahrzeugwartung erfolgen kann. Die elektronische Ansteuerbarkeit der Ventileinrichtungen 8,10,11,16,17,18,26,27 erlaubt ferner Schaltstellungskombinationen, mit denen im Normalbremsbetrieb nicht oder nur geringfügig durchflutete Rohrleitungsbereiche von Verunreinigungen befreit werden können. Wenn das Verfahren oder die Vorrichtung zum Abscheiden mit einer Vorrichtung zum Detektieren von Verunreinigungen kombiniert ist, kann die Länge der Spülroutine in Abhängigkeit von dem Verunreinigungsgrad eingestellt werden. Mit anderen Worten kann die Spülroutine so lange ausgeführt werden, bis der gewünschte Reinigungsgrad erzielt worden ist.

Es ist kostengünstig, wenn die Mittel zum Abscheiden gleichzeitig eine Funktion als unerläßliches Bauteil der Bremsanlage aufweisen. Beispielsweise kann der Druckmittelvorratsbehälter mit mehren, die Strömungsgeschwindigkeit verringernden Zellen versehen sein, in die das Druckmittel zum Ausgasen gefördert wird. Mit anderen Worten kann der Abscheidungsabschnitt in den Druckmittelvorratsbehälter 4 integriert sein, und die Abscheidung erfolgt mittels einer bestimmten Ansteuerung unerläßlicher Bauteile der Bremsanlage auf Basis eines abgespeicherten Softwareprogramms, welches mittels der elektronischen Steuereinheit 31 abgearbeitet wird. Weil in der Spülroutine aus dem Druckmittelvorratsbehälter 4 permanent gereinigtes Druckmittel angesaugt und wieder in den Kreislauf eingespeist wird, erfolgt eine sukzessive Reinigung des gesamten Kreislaufvolumens. Vorzugsweise ist der Abscheidungsabschnitt (der Druckmittelvorratsbehälter) am höchsten Punkt des Hydrauliksystems - das heißt im Bereich einer natürlichen Drucksenke - angeordnet, an dem sich Ausgasungsprodukte ansammeln.

Der Reinigungsprozeß kann durch Zusatzmaßnahmen unterstützt werden. Wenn Mittel zum Erwärmen des Druckmittels (Heizvorrichtung) vorgesehen sind, steigert dies das Ausgasungsbestreben. Als Heizvorrichtung kann beispielsweise ein beheizter Schlauch oder ein beheiztes Rohr entsprechend DE 19901029 A1 vorgesehen sein, deren diesbezüglicher Offenbarungsgehalt in die vorliegende Anmeldung einbezogen wird. Auch eine Heizeinrichtung im Bereich eines Drucksteuergerätes entsprechend DE 37 09 189 A1, DE 199 02 033 A1 und DE 199 20 171 A1 ist in diesem Zusammenhang sinnvoll. Weiterhin unterstützend ist, wenn der Druckmittelspiegel in dem Druckmittelvorratsbehälter nicht der Umgebungsatmosphäre sondern einem Unterdruck oder einem Vakuum ausgesetzt wird. Dementsprechend können mittel zur Unterdruck- oder Vakuumerzeugung vorgesehen sein. Es ist weiterhin vorsehbar, die Abscheidung mittels Ultraschallanregung zu verbessern. Dementsprechend können Ultraschallgeneratoren an Stellen des Rohrleitungssystems oder im Bereich des Abscheidungsabschnittes vorgesehen sein.

### Bezugszeichenliste

| | | | |
|---|---|---|---|
| 1 | Betätigungspedal | 29 | Drucksensor |
| 2 | Tandemhauptzylinder | 30 | Drucksensor |
| 3 | Simulator | 31 | Steuereinheit |
| 4 | Druckmittelvorratsbehälter | 32 | Betätigungswegsensor |
| 5 | Leitung | 33 | Radsensor |
| 6 | Radbremse | 34 | Radsensor |
| 7 | Radbremse | | |
| 8 | Trennventil | S₁ | Drucksensor |
| 9 | Leitungsabschnitt | S₂ | Drucksensor |
| 10 | Druckausgleichsventil | | |
| 11 | Trennventil | | |
| 12 | Leitung | | |
| 13 | Radbremse | | |
| 14 | Radbremse | | |
| 15 | Leitungsabschnitt | | |
| 16 | Druckausgleichsventil | | |
| 17 | 2/2 Wegeventil | | |
| 18 | 2/2 Wegeventil | | |
| 19 | | | |
| 20 | Druckquelle | | |
| 21 | Hochdruckspeicher | | |
| 22 | Elektromotor | | |
| 23 | Pumpe | | |
| 24 | Druckbegrenzungsventil | | |
| 25 | Leitung | | |
| 26 | Auslaßventil | | |
| 27 | Auslaßventil | | |
| 28 | Leitung | | |

## Patentansprüche

1. Elektronisch regelbares Bremsbetätigungssystem mit einem drucklosen Druckmittelvorratsbehälter (4), mit mindestens einer durch eine elektronische Steuereinheit (31) ansteuerbaren Druckquelle (20), mit deren Druck Radbremsen (6,7;13,14) des Fahrzeuges beaufschlagbar sind, mit einer Einrichtung (2,32,S₁) zur Erkennung des Fahrerverzögerungswunsches, deren Ausgangssignale der elektronischen Steuereinheit (31) zugeführt werden, sowie mit den Radbremsen (6,7;13,14) vorgeschalteten Ventileinrichtungen (8,10,11,16,17,18,26,27), die von der elektronischen Steuereinheit (31) ansteuerbar sind und die die Radbremsen (6,7;13,14) anhand eines Rohrleitungssystems wahlweise mit der Druckquelle (20) oder dem Druckmittelvorratsbehälter (4) verbinden, **dadurch gekennzeichnet, dass** die elektronische Steuereinheit (31) Mittel zum elektronisch gesteuerten Abscheiden von im Bremssystem, insbesondere im Druckmittel, enthaltenen und / oder gelösten Verunreinigungen aufweist.

2. Elektronisch regelbares Bremsbetätigungssystem nach Anspruch 1, **dadurch gekennzeichnet, daß** die Steuereinheit (31) eine eingespeicherte Spülroutine aufweist.

3. Elektronisch regelbares Bremsbetätigungssystem nach Anspruch 1 oder 2, **dadurch gekennzeichnet, daß** Mittel zum Abscheiden ein integrierter Systembestandteil des Rohrleitungssystems sind.

4. Elektronisch regelbares Bremsbetätigungssystem nach einem oder mehreren der vorhergehenden Ansprüche, **dadurch gekennzeichnet, daß** ein unerläßliches Bauteil des Bremsbetätigungssystems gleichzeitig als Mittel zur Abscheidung vorgesehen ist.

5. Elektronisch regelbares Bremsbetätigungssystem nach einem oder mehreren der vorhergehenden Ansprüche, **dadurch gekennzeichnet, daß** Rohrleitungsabschnitte mit hoher Druckmittelströmungsgeschwindigkeit und stromabwärts wenigstens ein Abscheidungsabschnitt mit demgegenüber verringerter Druckmittelströmungsgeschwindigkeit vorgesehen sind.

6. Elektronisch regelbares Bremsbetätigungssystem nach Anspruch 5, **dadurch gekennzeichnet, daß** der Abscheidungsabschnitt in dem Druckmittelbehälter (4) vorgesehen ist.

7. Elektronisch regelbares Bremsbetätigungssystem nach einem oder mehreren der vorhergehenden Ansprüche, **dadurch gekennzeichnet, daß** wenigstens ein Mittel zum Erwärmen des Druckmittels vorgesehen ist.

8. Elektronisch regelbares Bremsbetätigungssystem nach einem oder mehreren der vorhergehenden Ansprüche, **dadurch gekennzeichnet, daß** der Abscheidungsabschnitt im Bereich einer Drucksenke angeordnet ist.

9. Elektronisch regelbares Bremsbetätigungssystem nach einem oder mehreren der vorhergehenden Ansprüche, **dadurch gekennzeichnet, daß** dem Abscheidungsabschnitt Mittel zur Unterdruckerzeugung und / oder Vakuumerzeugung zugeordnet sind.

10. Elektronisch regelbares Bremsbetätigungssystem nach einem oder mehreren der vorhergehenden Ansprüche, **dadurch gekennzeichnet, daß** ein Systembestandteil, insbesondere der Abscheidungsabschnitt mit einem Ultraschallgenerator zur Erzeugung von Ultraschallschwingungen in dem Druckmittel versehen ist.

11. Verfahren zum Betreiben eines elektronisch regelbaren Bremsbetätigungssystem nach einem der Ansprüche 1 bis 10 für Kraftfahrzeuge, mit einem drucklosen Druckmittelvorratsbehälter (4), mit mindestens einer durch eine elektronische Steuereinheit (31) ansteuerbaren Druckquelle (20), mit deren Druck Radbremsen (6,7;13,14) des Fahrzeuges beaufschlagbar sind, mit einer Einrichtung (2,32,S₁) zur Erkennung eines Fahrerverzögerungswunsches, deren Ausgangssignale der elektronischen Steuereinheit (31) zugeführt werden, sowie mit den Radbremsen (6,7;13,14) vorgeschalteten Ventileinrichtungen (8,10,11,16,17,18,26,27), die von der elektronischen Steuereinheit (31) ansteuerbar sind und die die Radbremsen (6,7;13,14) anhand eines Rohrleitungssystems wahlweise mit der Druckquelle (20) oder mit dem Druckmittelvorratsbehälter (4) verbinden, **dadurch gekennzeichnet, dass** die elektronische Steuereinheit (31) einen elektronisch gesteuerten Verfahrensschritt betreffend die Abscheidung von im Bremssystem, insbesondere im Druckmittel, enthaltenen und / oder gelösten Verunreinigungen durchführt.

12. Verfahren nach Anspruch 11, **dadurch gekennzeichnet, daß** der Verfahrensschritt automatisiert und / oder auf Abruf durchführbar ist.

13. Verfahren nach Anspruch 11 oder 12, **dadurch gekennzeichnet, daß** für die Abscheidung der Verunreinigungen eine Spülroutine vorgesehen ist.

14. Verfahren nach einem der Ansprüche 11 bis 13, **dadurch gekennzeichnet, daß** für die Spülroutine Ventileinrichtungen (8,10,11,16,17,18,26,27) gemäß einer vorgebbaren zeitlichen Abfolge von einer Öffnungsstellung in eine Schließstellung und / oder umgekehrt angesteuert werden.

15. Verfahren nach einem der Ansprüche 11 bis 14, **dadurch gekennzeichnet, daß** die Abscheidung während dem Fahrbetrieb ständig, oder im Abstand von vorgebbaren Intervallen oder zu vorgebbaren Fahrsituationen oder auf Nachfrage und /oder bei ruhendem Fahrbetrieb erfolgt.

16. Verfahren nach einem der Ansprüche 11 bis 15, **dadurch gekennzeichnet, daß** die Länge der Spülroutine in Abhängigkeit von dem Verunreinigungsgrad des Druckmittels eingestellt wird.

## Claims

1. Electronically controllable brake actuation system having a pressureless pressure medium reservoir container (4), having at least one pressure source (20) which can be activated by an electronic control unit (31) and with which pressure can be applied to wheel brakes (6, 7; 13, 14) of the vehicle, having a device (2, 32, S₁) for detecting the driver's deceleration request, the output signals of which device are fed to the electronic control unit (31), and having valve devices (8, 10, 11, 16, 17, 18, 26, 27) which are connected upstream of the wheel brakes (6, 7; 13, 14) and which can be activated by the electronic control unit (31) and which optionally connect the wheel brakes (6, 7; 13, 14) to the pressure source (20) or to the pressure medium reservoir container (4) by means of a pipeline system, **characterized in that** the electronic control unit (31) has means for the electronically controlled precipitation of impurities contained and/or dissolved in the brake system, in particular in the pressure medium.

2. Electronically controllable brake actuation system according to Claim 1, **characterized in that** the control unit (31) has a stored rinsing routine.

3. Electronically controllable brake actuation system according to Claim 1 or 2, **characterized in that** precipitation means are an integrated system component of the pipeline system.

4. Electronically controllable brake actuation system according to one or more of the preceding claims, **characterized in that** an indispensible component of the brake actuation system is provided at the same time as precipitation means.

5. Electronically controllable brake actuation system according to one or more of the preceding claims, **characterized in that** pipeline sections are provided with a high pressure medium flow rate and with at least one precipitation section downstream, said precipitation section having a pressure medium flow rate which is reduced compared to the latter.

6. Electronically controllable brake actuation system according to Claim 5, **characterized in that** the precipitation section is provided in the pressure medium container (4).

7. Electronically controllable brake actuation system according to one or more of the preceding claims, **characterized in that** at least one means is provided for heating the pressure medium.

8. Electronically controllable brake actuation system according to one or more of the preceding claims, **characterized in that** the precipitation section is arranged in the region of a pressure sink.

9. Electronically controllable brake actuation system according to one or more of the preceding claims, **characterized in that** the precipitation section is assigned means for generating negative pressure and/or generating a vacuum.

10. Electronically controllable brake actuation system according to one or more of the preceding claims, **characterized in that** a system component, in particular the precipitation section, is provided with an ultrasonic generator for generating ultrasonic vibrations in the pressure medium.

11. Method for operating an electronically controllable brake actuation system according to one of Claims 1 to 10 for motor vehicles, having a pressureless pressure medium reservoir container (4), having at least one pressure source (20) which can be activated by an electronic control unit (31) and with which pressure can be applied to wheel brakes (6, 7; 13, 14) of the vehicle, having a device (2, 32, S₁) for detecting a driver's deceleration request, the output signals of which device are fed to the electronic control unit (31), and having valve devices (8, 10, 11, 16, 17, 18, 26, 27) which are connected upstream of the wheel brakes (6, 7; 13, 14) and which can be activated by the electronic control unit (31), and which optionally connect the wheel brakes (6, 7; 13, 14) to the pressure source (20) or to the pressure medium reservoir container (4) by means of a pipeline system, **characterized in that** the electronic control unit (31) carries out an electronically controlled method step relating to the precipitation of impurities contained and/or dissolved in the brake system, in particular in the pressure medium.

12. Method according to Claim 11, **characterized in that** the method step is automated and/or can be carried out on retrieval.

13. Method according to Claim 11 or 12, **characterized in that** a rinsing routine is provided for the precipitation of the impurities.

14. Method according to one of Claims 11 to 13, **characterized in that** for the rinsing routine, valve devices (8, 10, 11, 16, 17, 18, 26, 27) are activated from an open position into a closed position and/or vice versa in accordance with a predefined time sequence.

15. Method according to one of Claims 11 to 14, **characterized in that** the precipitation takes place continuously during the driving mode or at predefinable intervals or in predefinable driving situations or on request and/or in a stationary driving mode.

16. Method according to one of Claims 11 to 15, **characterized in that** the length of the rinsing routine is set as a function of the degree of impurity of the pressure medium.

## Revendications

1. Système d'actionnement de frein à régulation électronique doté d'un conteneur de réserve de moyen de pression (4) sans pression, avec au moins une source de pression (20) pouvant être pilotée par le biais d'une unité de commande électronique (31) à l'aide de laquelle les freins de roue (6, 7 ; 13, 14) du véhicule peuvent être alimentés en pression, avec un dispositif (2, 32, S₁) de reconnaissance de souhait de ralentissement du conducteur, dont les signaux de sortie sont amenés à l'unité de commande électronique (31), ainsi qu'avec les freins de roue (6, 7 ; 13, 14) des dispositifs de soupape (8, 10, 11, 16, 17, 18, 26, 27) connectés en amont pouvant être excités par l'unité de commande électronique (31) et reliant les freins de roue (6, 7 ; 13, 14) à l'aide d'un système de conduite tubulaire au choix avec la source de pression (20) ou avec le conteneur de réserve de moyen de pression (4), **caractérisé en ce que** l'unité de commande électronique (31) comprend des moyens de séparation, commandés sur le plan électronique, des saletés dissoutes et / ou contenues dans le système de freinage, notamment dans le moyen de pression.

2. Système d'actionnement de frein à régulation électronique selon la revendication 1, **caractérisé en ce que** l'unité de commande (31) comprend un sous-programme de rinçage mémorisé.

3. Système d'actionnement de frein à régulation électronique selon la revendication 1 ou 2, **caractérisé en ce que** les moyens de séparation sont un composant du système intégré du système de conduite tubulaire.

4. Système d'actionnement de frein à régulation électronique selon l'une quelconque des revendications précédentes ou plusieurs d'entre elles, **caractérisé en ce qu'**un composant essentiel du système d'actionnement de frein est prévu simultanément comme moyen de séparation.

5. Système d'actionnement de frein à régulation électronique selon l'une quelconque des revendications précédentes ou plusieurs d'entre elles, **caractérisé en ce que** les sections de conduite tubulaire sont dotées de moyens de vitesse élevée d'écoulement de pression et en aval d'au moins une section de séparation dotée au contraire de moyens de vitesse réduite d'écoulement de pression.

6. Système d'actionnement de frein à régulation électronique selon la revendication 5, **caractérisé en ce que** la section de séparation est prévue dans le conteneur de moyen de pression (4).

7. Système d'actionnement de frein à régulation électronique selon l'une quelconque des revendications précédentes ou plusieurs d'entre elles, **caractérisé en ce qu'**au moins un moyen de chauffage du moyen de pression est prévu.

8. Système d'actionnement de frein à régulation électronique selon l'une quelconque des revendications précédentes ou plusieurs d'entre elles, **caractérisé en ce que** la section de séparation est disposée dans la région d'une cuvette de pression.

9. Système d'actionnement de frein à régulation électronique selon l'une quelconque des revendications précédentes ou plusieurs d'entre elles, **caractérisé en ce que** des moyens de production de sous-pression et / ou de production de vide sont associés à la section de séparation.

10. Système d'actionnement de frein à régulation électronique selon l'une quelconque des revendications précédentes ou plusieurs d'entre elles, **caractérisé en ce qu'**un composant du système, notamment la section de séparation, est pourvu d'un générateur d'ultrason permettant de produire des vibrations ultrasoniques dans le moyen de pression.

11. Procédé pour actionner un système d'actionnement de frein à régulation électronique selon l'une quelconque des revendications 1 à 10 pour véhicules automobiles, doté d'un conteneur de réserve de moyen de pression (4) sans pression, avec au moins une source de pression (20) pouvant être pilotée par le biais d'une unité de commande électronique (31) à l'aide de laquelle les freins de roue (6, 7 ; 13, 14) du véhicule peuvent être alimentés en pression, avec un dispositif (2, 32, S₁) de reconnaissance de souhait de ralentissement du conducteur, dont les signaux de sortie sont amenés à l'unité de commande électronique (31), ainsi qu'avec les freins de roue (6, 7 ; 13, 14) des dispositifs de soupape (8, 10, 11, 16, 17, 18, 26, 27) connectés en amont pouvant être excités par l'unité de commande électronique (31) et reliant les freins de roue (6, 7 ; 13, 14) à l'aide d'un système de conduite tubulaire au choix avec la source de pression (20) ou avec le conteneur de réserve de moyen de pression (4), **caractérisé en ce que** l'unité de commande électronique (31) met en oeuvre une étape de procédé commandée sur le plan électronique concernant la séparation des saletés dissoutes et / ou contenues dans le système de freinage, notamment dans le moyen de pression.

12. Procédé selon la revendication 11, **caractérisé en ce que** l'étape de procédé peut être effectuée de façon automatisée et / ou sur demande.

13. Procédé selon la revendication 11 ou 12, **caractérisé en ce qu'**un sous-programme de rinçage est prévu pour la séparation des saletés.

14. Procédé selon l'une quelconque des revendications 11 à 13, **caractérisé en ce que** des dispositifs de soupape (8, 10, 11, 16, 17, 18, 26, 27) sont commandés selon une séquence temporelle prédéfinie pour passer d'une position d'ouverture dans une position de fermeture et / ou inversement en vue d'exécuter le sous-programme de rinçage.

15. Procédé selon l'une quelconque des revendications 11 à 14, **caractérisé en ce que** la séparation se produit en permanence en situation de conduite et à intervalles prédéfinis ou dans des situations de conduite prédéfinies ou sur demande et / ou en situation de conduite à l'arrêt.

16. Procédé selon l'une quelconque des revendications 11 à 15, **caractérisé en ce que** la longueur du sous-programme de rinçage est réglée en fonction du degré de salissure du moyen de pression.
